# EUROPÄISCHE PATENTSCHRIFT

(11) **EP 1 318 246 B1**
(45) Veröffentlichungstag und Bekanntmachung des Hinweises auf die Patenterteilung: **12.03.2008**
(21) Anmeldenummer: 02027276.1
(22) Anmeldetag: 06.12.2002
(51) Int. Cl.: E04C 2/16, E04C 2/52, E04B 1/80, D04H 1/72, B32B 5/16

(54) **Oberflächenpräparierte Naturfaserdämmplatte und Verfahren zu seiner Herstellung**
Surface finished insulating panel made of natural fibres and its method of manufacture
Panneau d'isolation avec finition de surface constitué de fibres naturelles et son procédé de fabrication

(30) Priorität: 10.12.2001 DE 10160400
(43) Veröffentlichungstag der Anmeldung: 11.06.2003
(73) Patentinhaber: Borkowski, Martin, 45891 Gelsenkirchen (DE)
(72) Erfinder: Borkowski, Martin, 45891 Gelsenkirchen (DE)
(74) Vertreter: Auerbach, Bettina

(56) Entgegenhaltungen:
- EP-A- 0 224 009
- EP-A- 0 591 658
- EP-A- 1 099 806
- WO-A-99/41439
- DE-A- 19 755 070
- DE-A- 19 807 821
- US-A- 5 057 168

## Beschreibung

Die Erfindung betrifft eine oberflächenpräparierte Naturfaserdämmplatte auf der Basis von stabilisiertem Faservlies mit nachträglicher Behandlung der Vliesoberfläche und ein Verfahren zur Herstellung oberflächenpräparierter Naturfaserdämmplatten durch Bildung eines Faservlieses mit anschließender Stabilisierung und dem Aufbringen von Abdeckelementen auf die Oberfläche des Faservlieses, wie es in der Naturfaserbearbeitung und in der Baumaterialienindustrie für die Herstellung von dämmenden Bauelementen auf der Basis nachwachsender Rohstoffe benötigt wird.

Für das Herstellen von Dämmplatten aus Naturfasern wurden bereits Vorschläge unterbreitet. So beschreibt die DE 298 10 159 U1 eine Trittschalldämmplatte, in der die eingesetzten Naturfasern an ihren Kreuzungspunkten miteinander verklebt sind. Ein derartiges Dämmelement hat zwei gravierende Nachteile. Für die maximale Erschließung des Steifigkeitspotentials muß einerseits möglichst die gesamte Faseroberfläche mit Klebstoffen ausgestattet sein, um an jedem Kontakt mit einer Nachbarfaser eine stabilisierende Brücke zu bilden, und andererseits beschränkt sich die erreichbare Steifigkeit auf die mechanischen Eigenschaften des eingesetzten Fasermaterials. Die Verteilung des Klebstoffes kann üblicherweise in Pulverform oder in wäßriger Suspension vorgenommen werden, was in jedem Falle zu einem hohen Klebstoffverbrauch mit den nachteiligen Wirkungen auf die Dämmplattendichte und bei Einsatz von suspendierten Klebstoffen auch zu einem hohen Energieaufwand für das erforderliche Trocknen verbunden ist.
Eine weitere technische Lösung wird mit der DE 299 22 155 U1 bekannt gemacht. Sie sieht vor, Hanfschäben als zerkleinerte und getrocknete pflanzliche Feststoffe als schüttfähigen Dämmstoff in eine formstabile äußere Hülle als dämmende Füllung einzubringen. Bei dieser Lösung wird die erwünschte Beschichtungsfähigkeit und die angestrebte Schallabsorbtion um den Preis einer höheren Gesamtdichte der erzeugten Formkörper und mit höheren wirtschaftlichen Gesamtaufwendungen erreicht. Vorteilhafterweise bietet diese Lösung jedoch eine zweckmäßige Verwendungsvariante für die im allgemeinen überzähligen Schäben bei der Fasergewinnung aus Hanfpflanzen.

*Mit der* EP 0 591 658 A1 *wird ein Wärmedämmelement beschrieben, das für die Wand-, Decken-, Dach-, Tür- oder Fußbodengestaltung von Gebäuden geeignet sein soll und im wesentlichen aus Leinenfasern gebildet ist. Dazu sollen zunächst Leinenfasern gewonnen werden, diese mit einem Bindemittel gemischt und zu einem Vlies aufbereitet werden, wobei mehrere Vliesschichten übereinander angeordnet, mit einem Bindemittel verbunden und anschließend getrocknet werden. Bei der bekannten Feinfaserigkeit von Leinenfasern stellt dieser Vorschlag hohe Anforderungen an das einzusetzende Bindemittel, um zu LYärmedämmelementen ausreichender mechanischer Festigkeit zu gelangen. Vorgeschlagen wir weiterhin die Herstellung formstabiler Formkörper mittels Vernadelung gegebenenfalls kreuzweise übereinander angeordneter Vliese. Außerdem soll eine Stabilisierung solcher Formkörper durch den Einsatz von speziellen Basisvliesen als Deckschicht erreicht werden können. Für eine kontinuierliche Dämmstofffertigung mit den angestrebten Dämm- und Festigkeitseigenschaften und unter Einsatz von Ganzpflanzenbestandteilen ist die vorgeschlagene Lösung offensichtlich ungeeignet.*

Schließlich wird in der DE 197 55 070 A1 ein Dämmmaterial mit Schichtstruktur beschrieben, welches ebenfalls als Bauelement für die Trittschalldämmung einzusetzen sein soll. Das vorgeschlagene Bauelement enthält eine Schicht aus Naturfasern, an deren Oberflächen mit Klebstoffen Papier und/oder Metallfolien fixiert sind. *In dem von der Anmeldung kritisierten Stand der Technik wird auf die unzureichende Kräuselung der Hanffasern zur Ausbildung der für die Dämmung benötigten lockeren Schichten hingewiesen. Auch die Gefahr des Entstehens örtlicher Dichteschwankungen beim Einsatz von unstabilisierten Hanffasern wird erwähnt. Dennoch erfüllt die vorgeschlagene Lösung* hinsichtlich der Voraussetzungen für die Wärme- und Trittschalldämmung nur sehr geringe Anforderungen, weil es an jeglichen Maßnahmen zur nachhaltigen Aufrechterhaltung einer Porenstruktur in der Faserschicht fehlt. Für das Befestigen der Oberflächenabdeckungen werden zudem mangels dort konzentriert angeordneter Kontaktflächen verhältnismäßig große Klebstoffinengen benötigt. Hierdurch wird die Dichte des Elementes und der Herstellungsaufwand unnötig erhöht. *Für den Einsatz von Ganzpflanzenbestandteilen gibt auch diese vorgeschlagene technische Lösung keine Hinweise.*

Die Aufgabe der Erfindung besteht deshalb im Schaffen einer technischen Lösung, mit deren Hilfe die Mängel des bekannten Standes der Technik überwunden werden. *Das betrifft vor allem den in bisher vorgeschlagenen technischen Lösungen vorgesehenen ausschließlichen Einsatz der Fasern von Faserpflanze, die vollkommene Benetzung dieser Fasern mit Bindemitteln oder die Anordnung von Klebstoffschichten auf den Deckflächen der Faservliese zur Verbindung von ebenen Papier- oder Metallfolien. Weiterhin soll der bisherige Mangel überwunden werden, wonach eine mechanische Belastung der Dämmelemente zur Verringerung der Porigkeit und damit zur Verringerung der Dämmeigenschaften führen kann.*
*Deshalb geht es* insbesondere um eine technische Lösung, die einerseits bedarfsweise die kompletten Bestandteile einer aufgeschlossenen Naturfaserpflanze zu nutzen gestattet und bei Aufrechterhaltung einer vergleichsweise geringen Bauelementedichte höhere Anforderungen an die Trittschallabsorbtion und an die gleichbleibende Druck- und Biegezugfestigkeit erfüllt, welche für spezielle Einsatzfälle produktionstechnisch flexibel regelbar gestaltet Im Falle des Einsatzes von Oberflächenbeschichtungen soll der Anspruch an einzusetzende Klebstoffe minimiert werden können. Gleichfalls soll durch eine bessere Lastverteilung bei auftretenden Druckbelastungen die Lastaufnahmefähigkeit der zu schaffenden Bauelemente deutlich erhöht werden können.

Die Aufgabe wird erfindungsgemäß durch die Ansprüche 1 und 12 gelöst. Die vorteilhaften Ausgestaltungen der Erfindung sind in den Unteransprüchen beschrieben. Danach besteht eine oberflächenpräparierte Naturfaserdämmplatte aus einem stabilisiertem Faservlies, dessen Oberfläche nachträglich behandelt wurde.

Entsprechend des vorgesehenen Einsatzes der Dämmplatte können im Faservlies die Teile aus einer Ganzpflanzenverarbeitung, insbesondere die Pflanzenfasern mit wählbaren mittleren Längen und die Schäben mit einer wählbaren mittleren Stückgröße, in praktisch beliebigen Rezepturanteilen enthalten sein. Die anfallenden Samenkörner werden dabei wegen der damit verbundenen störenden technologischen Effekte vor, während oder nach dem Ganzpflanzenaufschluß aus der weiteren Verarbeitung zu Dämmplatten ausgeschieden.
Für die Naturfaserdämmplatte werden die natürlichen Vliesbestandteile mit wählbaren Anteilen an Stabilisierungselementen vermischt, um mit deren Hilfe in einem nachgeschalteten Temperprozeß die gewünschte Faservliesstabilität zu gewährleisten. Auf der Oberfläche des Faservlieses ist eine Schicht aus nichtfaserigen Pflanzenmaterial angeordnet, die insbesondere der Lastverteilung auf das Faservlies und gleichermaßen dem Schaffen von Kontaktflächen für eine eventuelle nachträgliche Oberflächenbeschichtung dient. Kennzeichnend für die vorgeschlagene Naturfaserdämmplatte ist ebenfalls, daß das stabilisierte Faservlies mit der an der Oberfläche befindlichen Schicht aus nichtfaserigen Pflanzenmaterial fest verbunden ist.
Die Stabilisierungslemente für das Gewährleisten der gewünschten nachhaltigen Steifigkeit des Faservlieses können sowohl thermoplastisches Fasermaterial als auch thermoplastisches Kunststoffpulver, reaktionsfähige duroplastische Harzsysteme oder Gemische aus diesen Stoffen sein.
Vorteilhafterweise besteht das Faservlieses aus einem Gemisch von Hanffasern und Hanfschäben und das an der Oberfläche des Faservlieses angeordnete nichtfaserige Pflanzenmaterial aus Hanfschäben mit mittleren Längenabmessungen zwischen 1 und 100 mm. Alternativ dazu kann die an der Oberfläche des Faservlieses angeordnete Schicht aus nichtfaserigen Pflanzenmaterial auch aus zerkleinertem Getreidestroh, Holzspänen und/oder zerkleinertem Papier bestehen.
Das nichtfaserige Oberflächenbeschichtungsmaterial wird bevorzugt mechanisch in die Oberfläche des Faservlieses eingebunden oder bei gewünschtem Qualitätserfordernis des Endproduktes bis in die Vliesschicht mittels speziell profilierter Walzentechnik nachträglich eingebracht und dabei gleichzeitig parallel zur Oberfläche des Faservlieses ausgerichtet. Damit kann der Schäbenanteil im Faservlies und an der Oberfläche nach der Vliesbildung nachträglich entsprechend dem gewünschten Eigenschaften des Endproduktes reguliert werden.
Es ist auch möglich, das Oberflächenbeschichtungsmaterial durch klebende Elemente an der Oberfläche des Faservlieses nach der Vliesbildung zu befestigen.

In beiden Fällen erfolgt dieser Prozeß vor dem thermischen Stabilisieren der Dämmplatten, so daß es immer zu einer kraftschlüssigen Verbindung von Faservlies und Oberflächenbeschichtungsmaterial kommt, wobei im erstgenannten Fall zusätzlich eine formschlüssige nachträgliche Einbindung in die Faserstruktur des Faservlieses zu verzeichnen ist.
Der Temperprozeß kann wahlweise mit einer mechanischen Verdichtung des bisher aufbereiteten und präparierten Faservlieses gekoppelt werden.

Es ist möglich, die Schichten aus nichtfaserigen Pflanzenmaterial in der bezeichneten Weise bei Bedarf beidseitig an den Oberflächen des Faservlieses anzuordnen.
Indem der Formgebungs- und Stabilisierungsprozeß für die Naturfaserdämmplatten in einem Arbeitsgang erfolgt, kann er unproblematisch mit einem erwünschten Kalibrieren der Deckfläche des beschichteten Faservlieses verbunden werden. Derartig eingeprägte oder eingefräste Kanäle und Profilierungen können zur Aufnahme von Funktionselementen, wie Installationsleitungen, Heizungselementen, Kühl- oder Befestigungselementen, genutzt werden.
Die oberflächenpräparierte Naturfaserdämmplatte kann zudem mit optischen und/oder funktionalen Abdeckungen zusätzlich ausgestattet sein. Derartige Ausstattungen sind vorteilhafter Weise metallische oder nichtmetallische Folien, Furniere oder Bleche.

Das vorgeschlagene Herstellungsverfahren für die Naturfaserdämmplatten sieht zunächst das Bilden eines Faservlieses mit nachfolgender Stabilisierung vor, wobei das Aufbringen von Abdeckelementen auf die Oberfläche des Faservlieses vorgesehen ist. Beim Aufschließen des Faserrohstoffs, der bevorzugt aus Hanfpflanzen besteht, werden zwischen 10 und 60 % der anfallenden Schäben vom übrigen zerfaserten Aufschlußmaterial abgetrennt. Dem Aufschlußprozeß werden die gesamten Hanfpflanzen ohne den Samenständen zugeführt. Wenn es zum Aufschluß der gesamten Hanfpflanze kommt, müssen den anfallenden Schäben und Fasern zuvor die störenden Samenkörner entzogen werden. Nach dem erstmaligen Kalibrieren des Faservlieses wird das abgetrennte Schäbenmaterial wenigstens einseitig auf die Oberfläche des Faservlieses aufgebracht. Danach wird in einem weiteren Bearbeitungsschritt das oberflächenbeschichtete Faservlies thermisch nachbehandelt, wodurch es zur Stabilisierung des Faserverbundes im Vlies und zur Verbindung des Faservlieses mit dem eingesetzten Beschichtungsmaterial kommt.

Infolge der thermoplastischen Eigenschaften der dem Naturfasermaterial zugesetzten Stabilisierungselemente kommt es im thermischen Nachbehandlungsprozeß zum teilweisen Aufschmelzen der Stabilisierungselemente und damit zum Ausbilden eines sogenannten Sinter- oder Schmelzverbundes.
Es ist möglich, die beim Aufschluß der Hanfpflanzen gewonnenen Schäben vor dem Einsatz als Oberflächenbeschichtungsmaterial für das zu stabilisierende Faservlies vorzubehandeln.
Diese Behandlung kann im zusätzlichen Zerkleinern oder Walzen bestehen, um ein möglichst plattiges oder flächig ausgebildetes Material mit möglichst großen Anteilen an Kontaktflächen an der Oberfläche des beschichteten Dämmelementes zu erhalten.
Das Oberflächenbeschichtungsmaterial kann beispielsweise durch Präge-, oder Stachelwalzen mit speziell zugeschnittener Oberflächenstruktur der Walzen mechanisch in die Oberfläche des Faservlieses und auch bis in die Vliesschicht selbst eingearbeitet und dabei in seiner Lage geordnet und ausgerichtet werden oder mit Verbindungsmitteln, vorzugsweise thermoplastischen oder reaktionsfähigen Materialien, an der Oberfläche des Faservlieses fixiert werden. Vor oder während der thermischen Stabilisierung des oberflächenbeschichteten Naturfaserdämmelementes ist es möglich, die Oberfläche zu profilieren, um in die dabei entstehenden Kanalstrukturen die bereits erwähnten Funktionselemente einbringen zu können. Wegen der besonderen Beschaffenheit der beschichteten Oberfläche der Naturfaserdämmplatte bestehen nun verbesserte Möglichkeiten zur Ausstattung der Dämmplatten mit Abdeckelementen, in Form von Folien, Blechen oder Furnieren, die diese Dämmplatten für die unterschiedlichsten Aufgaben geeignet machen.

Die Vorteile der Erfindung bestehen zusammengefaßt in der nun verfügbaren technischen Lösung, mit deren Hilfe Bauelemente geschaffen werden können, die hohe Ansprüche an den Gebrauchswert in Form von Trittschall-, Wärme- und/oder Kältedämmung erfüllen, dabei ein Maximum an Naturpflanzenanteilen enthalten und bedarfsweise auf die genauen Ansprüche des späteren Einsatzfalls ausgestattet werden können. Mit der Anordnung einer stabilisierenden Oberflächenschicht und auch der Möglichkeit, diese bis in die Vliesschicht nachträglich einzuarbeiten, werden gleichzeitig zwei Vorteile erschlossen: Einerseits wird die Belastungsfähigkeit des eigentlichen Faservlieses deutlich gegenüber dem Stand der Technik erhöht, ohne gleichzeitig verstärkte Vorkehrungen für die Vliesstabilisierung treffen zu müssen und es kann bedarfsweise schnell und flexibel auf die gewünschten Anforderungen für den Einsatzfall die Herstellung entsprechend durchgeführt werden.

Andererseits bestehen durch die porenarme Oberfläche des beschichteten Faservlieses geringe Anforderungen an den Einsatz von Verbindungsmitteln für aufzubringende Abdeckelemente. Die Konzentration von massereichen Bestandteilen in den Deckschichtbereichen der Dämmplatten unterstützt vorteilhaft die Absorbtion von Schallenergie, ohne die Eignung der Dämmelemente für die Wärme- und/oder Kältedämmung herabzusetzen.

Die Erfindung soll nachstehend mit einem Ausführungsbeispiel näher erläutert werden:
In der beigefügten Zeichnung zeigen
   - Fig. 1: die schematischen Schnittdarstellung einer beidseitig oberflächenpräparierten Naturfaserdämmplatte, die zudem mit Abdeckelementen aus profilierten Blechen ausgestattet ist;
   - Fig. 2: ein Verfahrensschema mit der Darstellung des Verfahrens unter Einsatz von Oberflächenbeschichtungsmaterial aus dem Aufschluß der Hanfpflanzen für die Gewinnung des Faservliesmaterials;
   - Fig. 3: ein Verfahrensschema mit der Darstellung des Verfahrens unter Einsatz von Oberflächenbeschichtungsmaterial aus anderen Prozessen als dem Aufschluß des für die Faservliesbildung benötigten Hanfpflanzenmaterials;

### Ausführungsbeispiel

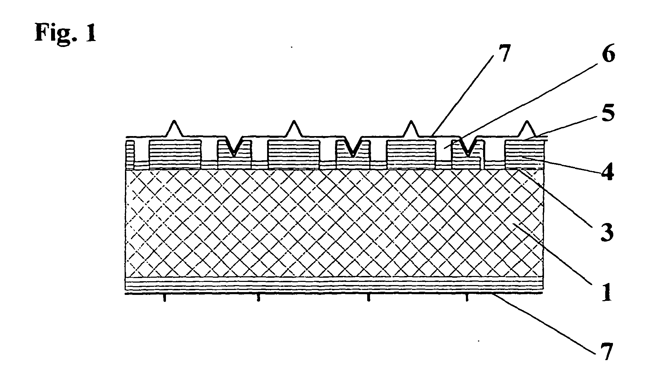

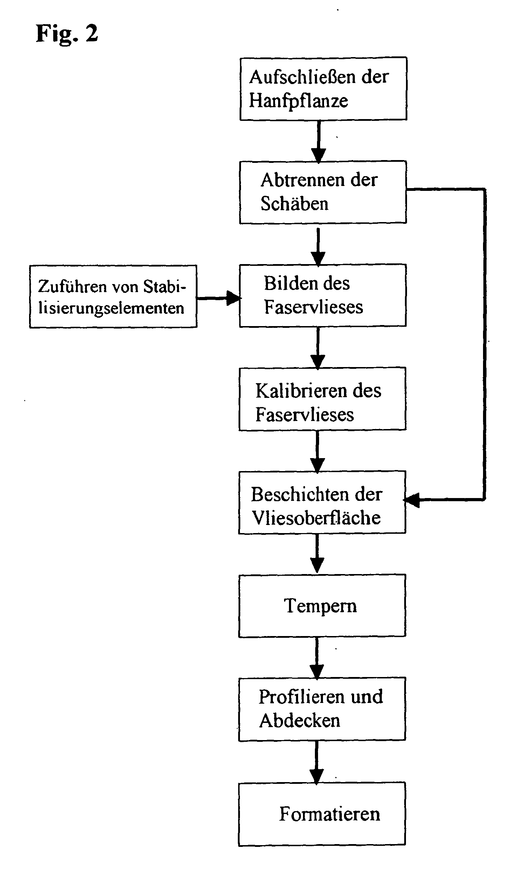

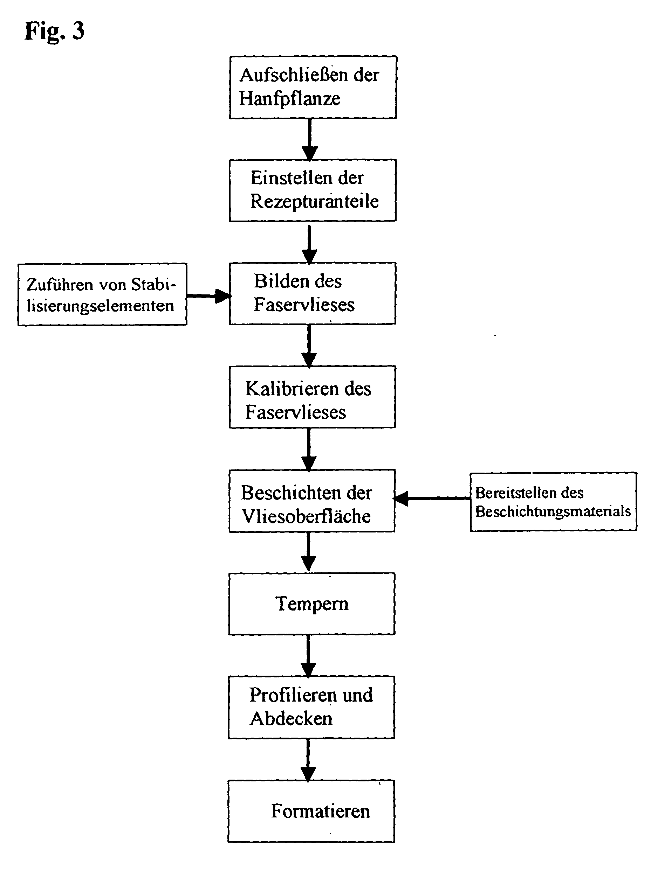

Gemäß den Figuren 1 bis 3 werden getrocknete Hanfpflanzen zunächst von Ihren Samenständen befreit. Das verbleibende Material wird zerfasert und dabei so getrennt, daß 50 % der enthaltenden Schäben aus dem aufgeschlossenen Material abgetrennt werden. Aus dem die Restschäben enthaltenden Fasermaterial wird unter Hinzufügung von 4 % thermoplastischem Stabilisierungselementen in Form von Stützfasermaterial ein Faservlies 1 gebildet, auf dessen Oberfläche 3 zunächst einseitig die Hälfte der zuvor entnommenen Schäben als nichtfaseriges Pflanzenmaterial 4 aufgestreut werden.

In einem Zwischenbehandlungschritt werden diese Schäben in die Faserstruktur des Faservlieses 1 oberflächlich durch gleichzeitigen Einsatz von Druck- und Scherkräften eingearbeitet. Danach erfolgt das Wenden des einseitig beschichteten Faservlieses 1 und die Wiederholung des Beschichtungsvorganges auf der noch unbeschichteten Vliesseite unter Einsatz von thermoplastischen Klebstoffen. Dieser Materialstrang gelangt sodann in einen Heizkanal, in welchem durch Temperatureinwirkung die eingebrachten Stabilisierungselemente zur Versteifung des Faservlieses 1 bei gleichzeitiger Einbindung des eingearbeiteten nichtfaserigen Pflanzenmaterials 4 infolge des Verschmelzens oder des Versinterns führen. Gleichzeitig wird der thermoplastische Klebstoff zur Fixierung der Schäbenschicht auf der zuletzt präparierten Seite des Faservlieses 1 wirksam.
Im thermischen Stabilisierungsprozeß wird mit entsprechend präparierten Kalibrierungs- und Profilierungswalzen die Maßhaltigkeit des hergestellten Materialstranges und das Einprägen der benötigten Kanäle 6 gewährleistet. Danach erfolgt zum Zwecke des Erstarrens der Stabilisierungselemente und der thermoplastischen Klebmittel eine Abkühlphase, bevor der Strang zur Gewinnung von einzelnen Bauelementen getrennt und die Bauelemente mit Abdeckungen 7 in Form von profilierten Blechen ausgestattet werden. Die Abdeckungen 7 werden dabei auf den im Kalibrierprozeß erzeugten Deckflächen 5 befestigt.

### Bezugszeichenliste

- 1: Faservlies

- 3: Oberfläche des Faservlieses
- 4: nichtfaseriges Pflanzenmaterial
- 5: Deckfläche
- 6: Kanal
- 7: Abdeckung

## Patentansprüche

1. Oberflächenpräparierte Naturfaserdämmplatte auf der Basis von stabilisiertem Faservlies mit nachträglicher Behandlung der Vliesoberfläche *durch Aufbringen einer Schicht,* **dadurch gekennzeichnet,**
**dass** im Faservlies (1) *sowohl die Schäben als auch die Fasern* aus der Ganzpflanzenverarbeitung mit wählbaren Rezepturanteilen enthalten sind, dass die natürlichen Vliesbestandteile *in Form von* Fasern und Schäben mit wählbaren Anteilen an Stäbilisierungselementen vermischt sind, dass auf der Oberfläche (3) des Faservlieses (1) eine Schicht aus nichtfaserigem Pflanzenmaterial (4) angeordnet ist *und*
**dass** das Faservlies (1) mit der an der Oberfläche (3) befindlichen Schicht aus nichtfaserigen Pflanzenmaterial (4) *in Form von Hanfschäben* fest verbunden ist.

2. Oberflächenpräparierte Naturfaserdämmplatte nach dem Anspruch 1, **dadurch gekennzeichnet, dass** die Stabilisierungselemente thermoplastisches Fasermaterial sind.

3. Oberflächenpräparierte Naturfaserdämmplatte nach dem Anspruch 1, **dadurch gekennzeichnet, dass** die Stabilisienmgselemente thermoplastisches Kunststoffpulver sind.

4. Oberflächenpräparierte Naturfaserdämmplatte nach dem Anspruch 1, **dadurch gekennzeichnet, dass** die Stabilisierungselemente reaktionsfähige duroplastische Kunststoffharzsysteme sind.

5. Oberflächenpräparierte Naturfaserdämmplatte nach dem Anspruch 1, **dadurch gekennzeichnet, dass** die Stabilisienmgselemente Gemische von thermoplastischem Fasermaterial, Kunststoffpulver und/oder reaktionsfähige duroplastische Kunststoffharzsysteme sind.

6. Oberflächenpräparierte Naturfaserdämmplatte nach einem der Ansprüche 1 bis 5, **dadurch gekennzeichnet, dass** die auf der Oberfläche (3) des Faservlieses (1) angeordnete Schicht aus nichtfaserigem Pflanzenmaterial (4) aus Hanfschäben mit mittleren Abmessungen zwischen 1 und 100 mm Länge besteht.

7. Oberflächenpräparierte Naturfaserdämmplatte nach einem der Ansprüche 1 bis 6, **dadurch gekennzeichnet, dass** das auf der Oberfläche des Faservlieses *angeordnete* nichtfaserige Pflanzenmaterial über die Oberfläche des Faservlieses (3) bis in das Faservlies (1) eingebunden und in seiner Lage ausgerichtet ist.

8. Oberflächenpräparierte Naturfaserdämmplatte nach einem der Ansprüche 1 bis 6, **dadurch gekennzeichnet, dass** die Schicht aus nichtfaserigem Pflanzenmaterial (4) durch klebende Elemente an der Oberfläche (3) des Faservlieses (1) befestigt ist.

9. Oberflächenpräparierte Naturfaserdämmplatte nach einem der Ansprüche 1 bis 8, **dadurch gekennzeichnet, dass** Schichten aus nichtfaserigem Pflanzenmaterial (4) beidseitig an den Oberflächen (3) des Faservlieses (1) angeordnet sind.

10. Oberflächenpräparierte Naturfaserdämmplatte nach einem der Ansprüche 1 bis 9, **dadurch gekennzeichnet, dass** im Formgebungs- und Kalibrierprozeß in der Deckfläche (5) des beschichteten Faservlieses (1) der Aufnahme von Funktionselementen, wie Installationsleitungen, Heizungselemente, Kühlelemente oder Befestigungselemente, dienende Kanäle (6) angeordnet sind.

11. Oberflächenpräparierte Naturfaserdämmplatte nach einem der Ansprüche 1 bis 10, **dadurch gekennzeichnet, dass** die oberflächenpräparierte Naturfaserdämmplatte mit optischen und/oder funktionalen Abdeckungen (7), wie metallische und nichtmetallische Folien, Furniere oder Bleche, ausgestattet ist.

12. Verfahren zum Herstellen oberflächenpräparierter Naturfaserdämmplatten nach einem der Ansprüche 1 bis 11 durch Bildung eines Faservlieses mit anschließender Stabilisierung und mit dem Aufbringen von Abdeckelementen auf die Oberfläche des Faservlieses,
**dadurch gekennzeichnet,**
**dass** beim Aufschließen des Faserrohstoffs in Form von Hanfpflanzen zwischen 10 und 60 % der anfallenden Schäben vom übrigen zerfaserten Aufschlußmaterial abgetrennt werden,
**dass** nach dem Kalibrieren des Faservlieses das abgetrennte Schäbenmaterial wenigstens einseitig auf die Oberfläche des Faservlieses aufgebracht wird und
**dass** in einem weiteren Bearbeitungsschritt das oberflächenbeschichtete Faservlies der Stabilisierung des Faserverbundes im Vlies und der Verbindung des Faservlieses mit dem Beschichtungsmaterial dienend thermische nachbehandelt wird.

13. Verfahren nach dem Anspruch 12, **dadurch gekennzeichnet, dass** die abgetrennten Schäben vor dem Einsatz als Oberflächenbeschichtungsmaterial des Faservlieses behandelt werden

14. Verfahren nach einem der Ansprüche 12 und 13, **dadurch gekennzeichnet, dass** das Oberflächenbeschichtungsmaterial nach der Vliesbildung mechanisch über die Oberfläche in das Faservlies und in die Oberfläche des Faservlieses eingearbeitet wird.

15. Verfahren nach dem Anspruch 14, **dadurch gekennzeichnet, dass** die Einarbeitung des nichtfaserigen Oberflächenbeschichtungsmaterials mittels speziell profilierter Nadel-, Stachel-, Präge oder Schaffußwalzen erfolgt.

16. Verfahren nach einem der Ansprüche 12 bis 15, **dadurch gekennzeichnet, dass** das Oberflächenbeschichtungsmaterial durch Verbindungsmittel an der Oberfläche des Faservlieses fixiert wird.

17. Verfahren nach dem Anspruch 16, **dadurch gekennzeichnet, dass** als Verbindungsmittel von Beschichtungsmaterial und Faservlies thermoplastische oder duroplastische Klebstoffe eingesetzt werden.

18. Verfahren nach einem der Ansprüche 12 bis 17, **dadurch gekennzeichnet, dass** vor dem Aufbringen von Abdeckelementen die Oberfläche der Naturfaserdämmplatte profiliert wird.

## Claims

1. Surface-finished natural fibre insulation panel based on stabilized fibre web with subsequent treatment of the web's surface by application of a layer, **characterized in that** the fibre web (1) contains both the shives and the fibres from whole plant processing in selectable recipe fractions,
the natural web constituents in the form of fibres and shives have been mixed with selectable fractions of stabilizing elements,
a layer of nonfibrous plant material (4) is disposed on the surface (3) of the fibre web (1), and
the fibre web (1) is firmly bonded to the nonfibrous plant material (4) layer present on the surface (3) in the form of hemp shives.

2. Surface-finished natural fibre insulation panel according to Claim 1, **characterized in that** the stabilizing elements are thermoplastic fibre material.

3. Surface-finished natural fibre insulation panel according to Claim 1, **characterized in that** the stabilizing elements are thermoplastic polymeric powder.

4. Surface-finished natural fibre insulation panel according to Claim 1, **characterized in that** the stabilizing elements are reactive thermosetting polymeric resin systems.

5. Surface-finished natural fibre insulation panel according to Claim 1, **characterized in that** the stabilizing elements are mixtures of thermoplastic fibre material, polymeric powder and/or reactive thermosetting polymeric resin systems.

6. Surface-finished natural fibre insulation panel according to any one of Claims 1 to 5, **characterized in that** the nonfibrous plant material (4) layer disposed on the surface (3) of the fibre web (1) consists of hemp shives having mean dimensions between 1 and 100 mm in length.

7. Surface-finished natural fibre insulation panel according to any one of Claims 1 to 6, **characterized in that** the nonfibrous plant material disposed on the surface of the fibre web has been bonded as far as into the fibre web (1) and oriented in its attitude via the surface of the fibre web (3).

8. Surface-finished natural fibre insulation panel according to any one of Claims 1 to 6, **characterized in that** the layer of nonfibrous plant material (4) is secured to the surface (3) of the fibre web (1) by adhesive elements.

9. Surface-finished natural fibre insulation panel according to any one of Claims 1 to 8, **characterized in that** layers of nonfibrous plant material (4) are disposed bothsidedly on the surfaces (3) of the fibre web (1).

10. Surface-finished natural fibre insulation panel according to any one of Claims 1 to 9, **characterized in that** channels (6) for receiving functional elements, such as installation lines, heating elements, cooling elements or fastening elements, have been disposed in the outside face (5) of the coated fibre web (1) in the shaping and calibrating operation.

11. Surface-finished natural fibre insulation panel according to any one of Claims 1 to 10, **characterized in that** the surface-finished natural fibre insulation panel is equipped with optical and/or functional coverings (7), such as metallic and nonmetallic foils, veneers or sheets.

12. Process for producing surface-finished natural fibre insulation panels according to any one of Claims 1 to 11 by formation of a fibre web with subsequent stabilization and with the application of covering elements to the surface of the fibre web, **characterized in that**
between 10 and 60% of the shives produced in the course of the destructurization of the fibre raw material in the form of hemp plants are removed from the rest of the fiberized destructurization material,
the removed shives material is applied is applied at least onesidedly to the surface of the fibre web after the fibre web has been calibrated, and
the surface-coated fibre web is thermally aftertreated in a further operation to stabilize the fibre assembly in the web and to bond the fibre web to the coating material.

13. Process according to Claim 12, **characterized in that** removed shives are treated before being used as a surface-coating material for the fibre web.

14. Process according to either of Claims 12 and 13, **characterized in that** the surface-coating material is mechanically worked into the fibre web and into the surface of the fibre web via the surface after web formation.

15. Process according to Claim 14, **characterized in that** the nonfibrous surface-coating material is worked in by means of specifically profiled needled, spiked, embossing or sheepfoot rolls.

16. Process according to any one of Claims 12 to 15, **characterized in that** the surface-coating material is fixed to the surface of the fibre web by bonding means.

17. Process according to Claim 16, **characterized in that** the bonding means used for bonding coating material and fibre web together are thermoplastic or thermosetting adhesives.

18. Process according to any one of Claims 12 to 17, **characterized in that** the surface of the natural fibre insulation panel is profiled before the step of applying covering elements.

## Revendications

1. Panneau isolant en fibres naturelles à surface préparée, à base de matelas de fibres stabilisé avec traitement additionnel de la surface du matelas par application d'une couche, **caractérisé en ce**
**que** tant les chènevottes que les fibres provenant de la transformation de la plante entière sont contenues dans le matelas de fibres (1) selon des proportions sélectionnables dans la formule, que les composants naturels du matelas en forme de fibres et chènevottes sont mélangés avec des éléments stabilisants selon des proportions sélectionnables,
**qu'**une couche de matériau végétal (4) non fibreux est disposée sur la surface (3) du matelas de fibres (1), et
**que** le matelas de fibres (1) est relié fixement à la couche de matériau végétal (4) non fibreux en forme de chènevottes de chanvre se trouvant sur sa surface (3).

2. Panneau isolant en fibres naturelles à surface préparée selon la revendication 1, **caractérisé en ce que** les éléments stabilisants sont en matériau fibreux thermoplastique.

3. Panneau isolant en fibres naturelles à surface préparée selon la revendication 1, **caractérisé en ce que** les éléments stabilisants sont en matière synthétique thermoplastique en poudre.

4. Panneau isolant en fibres naturelles à surface préparée selon la revendication 1, **caractérisé en ce que** les éléments stabilisants sont des systèmes réactifs à matières synthétiques et résine thermodurcissables.

5. Panneau isolant en fibres naturelles à surface préparée selon la revendication 1, **caractérisé en ce que** les éléments stabilisants sont des mélanges de matériau fibreux thermoplastique, de matière synthétique en poudre et/ou de systèmes réactifs à matières synthétiques et résine thermodurcissables.

6. Panneau isolant en fibres naturelles à surface préparée selon l'une des revendications 1 à 5, **caractérisé en ce que** la couche de matériau végétal non fibreux (4) disposée sur la surface (3) du matelas de fibres (1) est composée de chènevottes de chanvre de dimensions moyennes comprises entre 1 et 100 mm de longueur.

7. Panneau isolant en fibres naturelles à surface préparée selon l'une des revendications 1 à 6, **caractérisé en ce que** le matériau végétal non fibreux disposé sur la surface du matelas de fibres est lié jusqu'au matelas de fibres (1), ce sur toute la surface du matelas de fibres (3), et aligné sur sa position.

8. Panneau isolant en fibres naturelles à surface préparée selon l'une des revendications 1 à 6, **caractérisé en ce que** la couche de matériau végétal non fibreux (4) est fixée sur la surface (3) du matelas de fibres (1) par l'intermédiaire d'éléments adhésifs.

9. Panneau isolant en fibres naturelles à surface préparée selon l'une des revendications 1 à 8, **caractérisé en ce que** des couches de matériau végétal non fibreux (4) sont disposées des deux côtés sur la surface (3) du matelas de fibres (1).

10. Panneau isolant en fibres naturelles à surface préparée selon l'une des revendications 1 à 9, **caractérisé en ce que** des canaux (6) servant à loger des éléments fonctionnels tels que des câbles d'installation électrique, des éléments de chauffage, des éléments de refroidissement ou des éléments de fixation, sont disposés dans la surface extérieure (5) du matelas de fibres (1) revêtu pendant le processus de formage et de calibrage.

11. Panneau isolant en fibres naturelles à surface préparée selon l'une des revendications 1 à 10, **caractérisé en ce que** ce panneau isolant en fibres naturelles à surface préparée est équipé de parements (7) optiques et/ou fonctionnels tels que des films métalliques et non métalliques, des feuilles de placage ou des tôles.

12. Procédé pour fabriquer des panneaux isolants en fibres naturelles à surface préparée selon l'une des revendications 1 à 11, par formation d'un matelas de fibres avec stabilisation additionnelle et pose d'éléments de parement sur la surface du matelas de fibres, **caractérisé en ce**
**que** 10 à 60 % des chènevottes produites sont séparées du reste du matériau défibré lors du pulpage de la matière première fibreuse se présentant sous la forme de pieds de chanvre,
**que** les chènevottes isolées sont appliquées du moins unilatéralement sur la surface du matelas de fibres après le calibrage du matelas de fibres et
en ce que dans une étape supplémentaire de transformation, le matelas de fibres revêtu est soumis à traitement thermique ultérieur servant à stabiliser la liaison des brins dans le matelas et l'adhérence entre le matelas de fibres et le matériau de revêtement.

13. Procédé selon la revendication 12 **caractérisé en ce que** les chènevottes séparées sont traitées avant d'être utilisées comme matériau de revêtement pour la surface du matelas de fibres.

14. Procédé selon l'une des revendications 12 et 13 **caractérisé en ce qu'**après la formation du matelas, le matériau de revêtement de la surface est incorporé mécaniquement dans le matelas de fibres et sa surface sur toute la longueur du matelas.

15. Procédé selon la revendication 14 **caractérisé en ce que** l'incorporation du matériau non fibreux de revêtement de la surface s'effectue au moyen de hérissons, cylindres à pointes, rouleaux à gaufrer ou de rouleaux à pieds de mouton spécialement profilés.

16. Procédé selon l'une des revendications 12 à 15 **caractérisé en ce que** le matériau de revêtement de la surface est fixé par des liants à la surface du matelas de fibres.

17. Procédé selon la revendication 16 **caractérisé en ce que** des colles thermopla'stiques ou thermodurcissables sont utilisées comme liants entre le matériau de revêtement et le matelas de fibres.

18. Procédé selon l'une des revendications 12 à 17 **caractérisé en ce que** la surface du panneau isolant en fibres naturelles est profilée avant la pose d'éléments de parement.
